# EUROPEAN PATENT APPLICATION

(11) **EP 4 660 484 A1**
(43) Date of publication of application: **10.12.2025**
(21) Application number: 24749943.7
(22) Date of filing: 16.01.2024
(51) Int. Cl.: F16J 15/10, H01M 50/35, H01M 50/204, H01M 50/342

(54) **GASKET**

(30) Priority: 30.01.2023 JP 2023012276
(71) Applicant: NOK Corporation, Minato-ku Tokyo 105-8585 (JP)
(72) Inventor: MIYAKE, Ryo, Fujisawa-shi, Kanagawa 251-0042 (JP); YAMASHITA, Matsuyoshi, Fujisawa-shi, Kanagawa 251-0042 (JP); KOGA, Akiko, Fujisawa-shi, Kanagawa 251-0042 (JP)
(74) Representative: Global IP Europe Patentanwaltskanzlei
(86) International application number: PCT/JP2024/001034
(87) International publication number: WO 2024/161989

(57) **Abstract**

A gasket is provided that enables not only reducing a reaction force in an in-use state and reducing a decrease in sealing performance, but also reducing a decrease in sealing performance relative to a high-temperature gas. A gasket (1) is a gasket made of a porous body of an elastomer that seals a 300°C gas.

## Description

### [Technical Field]

The present invention relates to a gasket.

### [Background Art]

A battery module including a plurality of battery cells is provided with a gas release path to guide gas released from a gas release valve, which is provided in each of the battery cells, outside. The gas release valve of each of the battery cells is in communication with the gas release path and the gas released from the gas release valve of each of the battery cells is to be guided outside through the gas release path. In the battery module, when the gas generated in each of the battery cells causes an inner pressure in the battery cell to reach a predetermined value, the gas is to be released outside through the gas release valve. Moreover, a gasket is provided between the gas release valve of each of the battery cells and the gas release path and the gasket seals a communication path between the gas release valve and the gas release path, preventing the gas released from the gas release valve from leaking outside of the gas release path (see, for example, Patent Literature 1).

### [Citation List]

### [Patent Literature]

Patent Literature 1: Japanese Patent Application Publication No. 2022-500810

### [Summary of the Invention]

### [Technical Problem]

In a case where the gas release path is made of a deformable resin, there is a concern that the gas release path may be deformed or damaged if the reaction force of the gasket in an in-use state, in which that gasket is attached and compressed between the battery cell and the gas release path, is large. However, there is a concern that the gas released from the gas release valve may leak outside of the gas release path if the reaction force of the gasket attached and compressed between the battery cell and the gas release path is reduced. Moreover, since the gas release valve is configured to open the battery cell when the temperature and pressure of the gas in the battery cell become high, the gas to be released from the gas release valve is a gas with high temperature and high pressure. Accordingly, the gasket is also required to exhibit a sealing performance allowing for sealing a high-temperature gas. As seen from the above, for a gasket used in a conventional battery module, there is a demand for a configuration that is able to reduce a reaction force in an in-use state without a decrease in sealing performance and also causes no decrease in sealing performance relative to a high-temperature gas.

The present invention is made in view of the above-described problem and an object thereof is to provide a gasket that enables reducing a reaction force in an in-use state and reducing a decrease in sealing performance and also enabling reducing a decrease in sealing performance relative to a high-temperature gas.

### [Solution to Problem]

To achieve the above-described object, a gasket according to the present invention seals a 300°C gas, the gasket being made of a porous body of an elastomer.

In the gasket according to an aspect of the present invention, the porous body of the elastomer has a plurality of pores, the plurality of pores including a pore having a diameter in a range from 10 µm to 30 µm, inclusive.

In the gasket according to an aspect of the present invention, the plurality of pores include a pore having an aspect ratio of 1.3 or less, the aspect ratio being a ratio between a diameter a and a diameter b, the diameter a being a maximum diameter of a cross section of the porous body of the elastomer, the diameter b being a diameter in a direction perpendicular to the size a.

In the gasket according to an aspect of the present invention, the plurality of pores have another aspect ratio of 1.3 or less, the other aspect ratio being a ratio between a diameter c and a diameter d, the diameter c being a maximum diameter of another cross section perpendicular to the cross section of the porous body of the elastomer, the diameter d being a diameter in a direction perpendicular to the diameter c.

In the gasket according to an aspect of the present invention, a percentage of the pore having the aspect ratio of 1.3 or less in the cross section is 70% or more and a percentage of the pore having the other aspect ratio of 1.3 or less in the other cross section is 70% or more.

In the gasket according to an aspect of the present invention, the porous body of the elastomer is a porous body of a silicone elastomer.

The gasket according to an aspect of the present invention has: a pair of surfaces facing away from each other; and at least one through hole penetrating the pair of surfaces.

The gasket according to an aspect of the present invention is configured to be attached so that a flow path between a gas release valve of each of a plurality of battery cells of a battery module and a gas release path, the gas release path forming a space to guide a gas released from the plurality of gas release valves.

### [Advantageous Effects of the Invention]

According to the present invention, it is possible to not only reduce a reaction force in an in-use state and reduce a decrease in sealing performance, but also reduce a decrease in sealing performance relative to a high-temperature gas.

### [Brief Description of the Drawings]

[Fig. 1] Fig. 1 is a perspective view of a gasket according to an embodiment of the present invention.
[Fig. 2] Fig. 2 is a diagram illustrating an observation cross section of an elastomer porous body of the gasket according to the embodiment of the present invention.
[Fig. 3] Fig. 3 is a diagram of an observation cross section of the elastomer porous body formed by chemical foaming.
[Fig. 4] Fig. 4 is a perspective view of a gasket, which is a test example, according to the embodiment of the present invention.
[Fig. 5] Fig. 5 is a schematic diagram of a sealability evaluation tester for evaluating sealability.
[Fig. 6] Fig. 6 is a cross-sectional view illustrating the gasket according to the embodiment of the present invention in an in-use state, in which the gasket is attached to a battery module including a plurality of battery cells.

### [Description of Embodiment]

Description will be made below on an embodiment of the present invention with reference to the drawings.

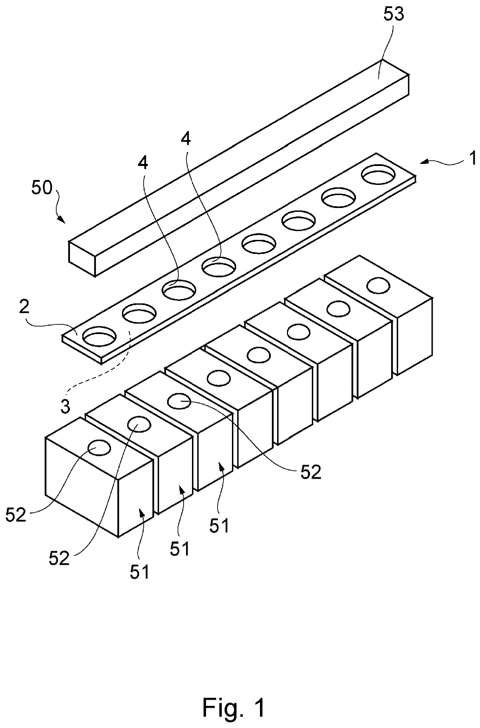

Fig. 1 is a perspective view of a gasket 1 according to an embodiment of the present invention, which is an example of a gasket according to the present invention. The gasket 1 is a gasket made of a porous body of elastomer and that seals a 300°C gas. A specific description will be made below on a configuration of the gasket 1. It should be noted that Fig. 1 illustrates a battery module, which is a later-described installation target for the gasket 1. Moreover, in a case where there are a plurality of identical components in the drawings, all the components may not be labelled with reference signs and some of the reference signs may be omitted.

The gasket 1 has, for example, a pair of surfaces, a sealing surface 2 and a sealing surface 3, facing away from each other and at least one through hole 4 penetrating the sealing surface 2 and the sealing surface 3. The gasket 1 has a plurality of through holes 4 as illustrated in Fig. 1. For example, each of the sealing surfaces 2, 3 extends along a plane and the gasket 1 has a platelike shape. Specifically, for example, the sealing surface 2 extends in parallel with or substantially in parallel with the plane and the sealing surface 3 extends in parallel with or substantially in parallel with the sealing surface 2. Moreover, in the gasket 1, the plurality of through holes 4 are, for example, aligned and the gasket 1 extends in an alignment direction of the through holes 4.

For example, the gasket 1 is configured such that a pressure loss of a fluid flowing through the gasket 1 reaches a predetermined value ΔP or more. In other words, the porous body of elastomer (hereinafter, referred to as elastomer porous body) forming the gasket is configured such that the pressure loss reaches the predetermined value ΔP or more. The predetermined value ΔP of the pressure loss refers to a value at which the gasket 1 is able to seal a gas with a pressure as high as 300°C in a later-described in-use state of the gasket 1. The predetermined value ΔP of the pressure loss may be set to a variety of values in accordance with a variety of constitutional elements of the gasket 1, such as a specific form of the gasket 1. The predetermined value ΔP of the pressure loss may also be set to a variety of values in accordance with a specific embodiment of use of the gasket 1. Examples of elements taken into consideration in setting the predetermined value ΔP of the pressure loss include a length of a flow path from the through holes 4 of the gasket 1 to the outside and a cross-sectional area thereof. It should be noted that the flow path from the through holes 4 of the gasket 1 to the outside refers to a route in the gasket 1 through which, if a leakage of the object to be sealed occurs in the gasket 1 in the in-use state, the object to be sealed leaks.

The gasket 1 has, for example, small pores of the elastomer porous body so that the pressure loss reaches the predetermined value ΔP. Specifically, for example, the pores of the gasket 1 include a pore with a diameter in a range from 10 µm to 30 µm, inclusive. A large number of the pores of the gasket 1 are pores with a diameter in a range from 10 µm to 30 µm, inclusive. For example, 50% or more of the pores of the gasket 1 are pores with a diameter in a range from 10 µm to 30 µm, inclusive.

Moreover, a cross-sectional shape of each of the pores of the gasket 1 is, for example, a perfect circle or substantially perfect circle. Moreover, a shape of each of the pores of the gasket 1 is, for example, a perfect sphere or substantially perfect sphere. Specifically, for example, the plurality of pores of the gasket 1 include a pore having an aspect ratio of 1.3 or less and the aspect ratio is a ratio between a diameter a, which is the maximum diameter of a predetermined cross section (a first cross section) of the elastomer porous body, and a diameter b, which is a diameter in a direction perpendicular to the diameter a. Specifically, for example, the pores formed in the elastomer porous body used for forming the gasket 1 and observed in a planar or substantially planar cross section (a first observation cross section) include a pore having a first aspect ratio of 1.3 or less and the first aspect ratio is a ratio between the diameter a, which is the maximum diameter, and the diameter b, which is the diameter perpendicular to the diameter a. The diameters a and b of the pore are to be measured using, for example, an image of the first observation cross section enlarged at a predetermined magnification.

As seen from the above, in a case where the pores observed in the first observation surface of the elastomer porous body include a pore having the first aspect ratio of 1.3 or less, the elastomer porous body may be determined to have a pore in the shape of a perfect circle or substantially perfect circle in cross section.

Specifically, for example, the plurality of pores of the gasket 1 also include a pore having a second aspect ratio of 1.3 or less and the second aspect ratio is a ratio between a diameter c, which is the maximum diameter of another cross section (a second cross section) perpendicular to the first cross section, and a diameter d, which is a diameter in a direction perpendicular to the diameter c. Specifically, for example, the pores formed in the elastomer porous body used for forming the above-described gasket 1 and observed in a planar or substantially planar cross section (a second observation cross section) perpendicular to the first observation cross section include a pore having the second aspect ratio of 1.3 or less and the second aspect ratio is a ratio between the diameter c, which is the maximum diameter, and the diameter d, which is the diameter perpendicular to the diameter c. The diameters c and d of the pore are to be measured using, for example, an image of the second observation cross section enlarged at a predetermined magnification.

As seen from the above, in a case where the pores observed in the second observation surface perpendicular to the first observation surface include a pore having the second aspect ratio of 1.3 or less as well as in the first observation surface, the elastomer porous body may be determined to have a pore in the shape of a perfect sphere or substantially perfect sphere.

Moreover, specifically, for example, a percentage of the pore having the first aspect ratio of 1.3 or less in the first cross section is 70% or more and a percentage of the pore having the second aspect ratio of 1.3 or less in the second cross section is 70% or more. Specifically, for example, the number of pores having the first aspect ratio of 1.3 or less within the pores observed in the first observation surface is 70% or more of the total number of the pores and the number of pores having the second aspect ratio of 1.3 or less within the pores observed in the second observation surface is 70% or more of the total number of the pores. In this case, the elastomer porous body may be determined to have a large number of perfectly spherical or substantially perfectly spherical pores.

The elastomer porous body forming the gasket 1 is a porous body made of, for example, an elastomer produced via an emulsion composition including, as a continuous phase, a liquid rubber material that cures to generate an elastomer. The liquid rubber material is, for example, a liquid silicone rubber material and the elastomer is, for example, silicone elastomer. The elastomer porous body may be produced by, for example, a known method.

Next, description will be made on an example of the elastomer porous body forming the gasket 1 and a manufacturing method thereof. The elastomer porous body is, by way of example, a porous body of silicone elastomer (hereinafter, also referred to as silicone elastomer porous body).

The silicone elastomer porous body may basically be made from a liquid silicone rubber material that cures to generate silicone elastomer and a water-in-oil emulsion containing, as a dispersed phase, water or water containing an aqueous solvent such as alcohol. For example, the silicone elastomer porous body may be provided by, for example, sufficiently stirring a liquid silicone rubber material with a low viscosity and water under reduced pressure to generate emulsion and then immediately curing the emulsion by heating.

Alternatively, a water-in-oil emulsion containing, in addition to a liquid silicone rubber material that cures to generate silicone elastomer and water, a silicone oil material having surfactant properties is produced under reduced pressure, thorough which the silicone elastomer porous body may be produced.

Although the liquid silicone rubber material is not particularly limited insofar as it generates silicone elastomer as cured by heating, it is preferable to use a so-called addition-reactive curable liquid silicone rubber.

Moreover, in order to produce the elastomer porous body having a perfectly spherical or substantially perfectly spherical pore as described above, it is necessary to prepare an emulsion composition under reduced pressure. Specifically, the emulsion composition is prepared by performing a process to mix and stir a material into emulsion under reduced pressure. It is not sufficient to add a process to put a prepared emulsion composition in a reduced pressure state to degas it.

The silicone oil material having surfactant properties is configured to act as a dispersion stabilizer for stably dispersing water in emulsion. In other words, the silicone oil material having surfactant properties is configured to exhibit an affinity for the liquid silicone rubber material as well as an affinity for water.

In the water-in-oil emulsion, water dispersedly exists in the form of particles (droplets of water) as a discontinuous phase (a dispersed phase). A particle size of the water particles substantially determines the size of the pores of the silicone elastomer porous body.

In order to obtain, for example, an emulsion excellent in water dispersion stability, the silicone oil material having surfactant properties and water are used at a ratio of 0.2 to 10 parts by weight and at a ratio of 10 to 250 parts by weight parts, respectively, relative to 100 by weight of the liquid silicone rubber material in the water-in-oil emulsion. Using such an emulsion excellent in water dispersion stability makes it possible to produce a favorable porous body with a greater stability.

It should be noted that for a liquid rubber material other than silicone, the emulsion composition may be provided by making a liquid rubber material, which constitutes a continuous phase, and a solvent phase-separated from the continuous phase, which constitutes a dispersed phase, into an emulsion with the addition of a surfactant or a substance having surfactant properties, if necessary.

The emulsion composition may be produced by a variety of methods. For example, a water-in-oil emulsion composition containing silicone elastomer is usually produced by mixing a liquid silicone rubber material, a silicone oil material having surfactant properties, water, and an additional additive, if necessary, under reduced pressure and sufficiently stirring them.

In order to produce the silicone elastomer porous body, for example, the emulsion composition is first subjected to primary heating. For the primary heating, for example, a heating temperature of 130°C or less is used so that the liquid silicone rubber material is heat-cured without volatilization of water in the emulsion. The heating temperature for the primary heating is, for example, 80°C or more and a heating time is, for example, 5 minutes to 60 minutes, approximately. The primary heating causes the liquid silicone rubber material to cure with the water particles in the emulsion trapped as in a state in the emulsion. The cured silicone rubber cures to an extent at which it withstands an expansion force due to the evaporation of water during a secondary heating. The secondary heating is performed to remove water from the cured silicone rubber in which the water particles are trapped. The secondary heating is performed at, for example, a temperature in a range from 70°C to 300°C, inclusive. A heating temperature below 70°C requires a long duration of time for the removal of water and a heating temperature exceeding 300°C may lead to the deterioration of the cured silicone rubber. Moisture is volatilized to be removed in 1 hour to 24 hours by heating at a temperature in a range from 70°C to 300°C, inclusive. Final curing of the silicone rubber material is also achieved as the moisture is volatilized to be removed through the secondary heating. With the moisture volatilized to be removed, pores having a size almost equal to a particle size of the water particles remain in the cured silicone rubber material (a silicone elastomer).

The elastomer porous body forming the gasket 1 may be produced from the emulsion composition without a foaming phenomenon such as chemical foaming in this manner. The dispersed phase such as the water particles in the emulsion composition is trapped in the elastomer cured through the primary heating and merely volatilized during the secondary heating. It should be noted that a method of manufacturing an elastomer porous body having a large number of perfectly spherical or substantially perfectly spherical pores is disclosed in, for example, International Publication No. WO2009/069803.

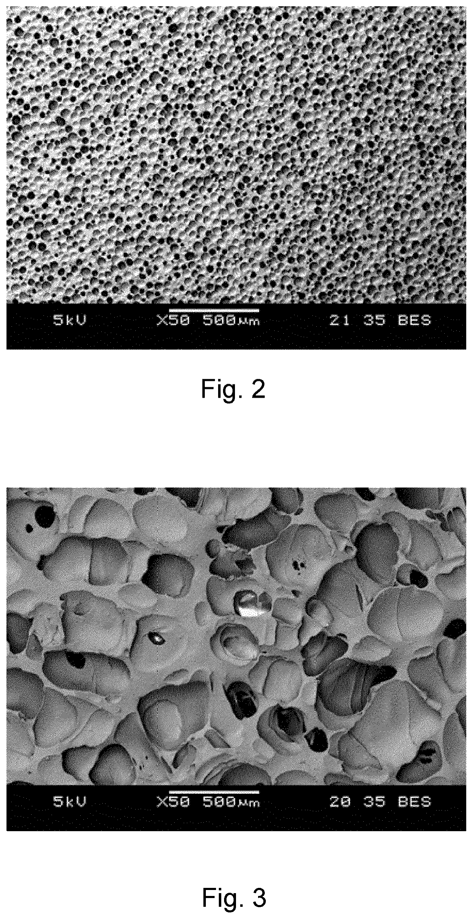

The silicone elastomer porous body produced by the manufacturing method as described above has a cross section (an observation cross section) as illustrated in, for example, Fig. 2 and has a large number of perfectly spherical or substantially perfectly spherical fine pores having a diameter in a range from 10 µm to 30 µm, inclusive. In contrast, in an elastomer porous body formed by chemical foaming, diameters of pores are increased as illustrated in Fig. 3. It should be noted that each of Fig. 2 and Fig. 3 provides a photograph of an observation cross section.

Next, description will be made on a sealing performance of the gasket 1 according to the embodiment of the present invention.

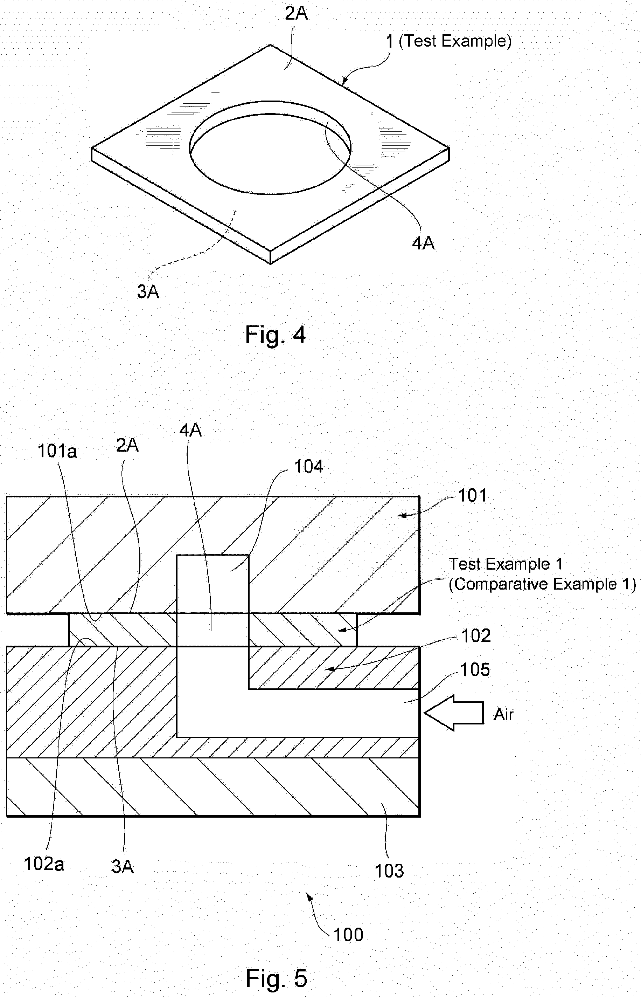

The present inventors molded an elastomer porous body in a desired shape by the method of manufacturing an elastomer porous body as described above to produce the gasket 1 (Test Example 1). Fig. 4 is a perspective view of the gasket 1, which is Test Example 1. As illustrated in Fig. 4, Test Example 1 has an outline in the shape of a rectangular plate having a pair of surfaces (seals 2A, 3A) and has a through hole 4A penetrating the sealing surfaces 2A, 3A. Specifically, Test Example 1 was produced as described later.

A mixture was obtained by adding a filler (5 parts by weight) and a silicone oil having surfactant properties (5 parts by weight) to a liquid silicone rubber (100 parts by weight) manufactured by Toray Dow Corning Co., Ltd. (trade name: DY35-7002) and stirring them. Next, a water-in-oil emulsion composition was prepared by stirring the mixture while gradually adding water of 140 parts by weight thereto. The water-in-oil emulsion composition was prepared under a reduced pressure of -98 kP in a vacuum stirrer.

The emulsion obtained in this manner was poured into a mold corresponding to the shape of Test Example 1 and heated at a set temperature of 130°C for 40 minutes (the primary heating) to mold an intermediate. The obtained intermediate was heated at 200°C in an electric furnace for six hours (the secondary heating) to remove water from the intermediate to obtain Test Example 1.

In contrast, a porous body of a silicone elastomer, which is a chemical foam, was defined as Comparative Example 1. Comparative Example 1 was the same or substantially the same in shape as Test Example 1. The porous body of the silicone elastomer of Comparative Example 1 was provided by kneading the silicone rubber KE-951U manufactured by Shin-Etsu Chemical Co., Ltd., a vulcanizing agent suitable thereto, and a chemical foaming agent to foam them.

Test Example 1 was cut in two directions perpendicular to each other, each of the cross sections was observed under an electron microscope (manufactured by JEOL Ltd., JSM5600), and an image of a state where there were 40 to 80 pores was captured (see Fig. 2). Likewise, Comparative Example 1 was cut in two directions perpendicular to each other, each of the cross sections was observed under an electron microscope (manufactured by JEOL Ltd., JSM5600), and an image of a state where there were 40 to 80 pores was captured (see Fig. 3). Then, within the image of each of the cross sections (an SEM photograph), predetermined rectangular regions containing the pores and in which the entirety was observable were defined as a first observation region and a second observation region and the following measurements of the pores contained in each of the rectangular regions were performed. It should be noted that pores overlapping boundaries of the first and second observation regions were all assumed to be contained in the observation regions.

The captured image was imported into a microcomputer software, Lenaraf 200, which runs on Excel manufactured by Microsoft Corporation, a reference length was set, a perimeter of each of the pores contained in each of the observation regions was traced to extract a shape of each of the pores, and then an aspect ratio was calculated. Specifically, in the first observation region, a dot of 20 points, approximately, was put for one pore to extract a shape of the pore, the diameter a, which is the maximum diameter of the extracted shape of the pore, and the diameter b in a direction perpendicular to the maximum diameter were read, and then an aspect ratio a/b of the pore was calculated. Moreover, in the second observation region, a dot of 20 points, approximately, was likewise put for one pore to extract a shape of the pore, the diameter c, which is the maximum diameter of the extracted shape of the pore, and the diameter d in a direction perpendicular to the maximum diameter were read, and then an aspect ratio c/d of the pore was calculated. Table 1 shows calculation results.

**[Table 1]**

| | Test Example 1 | Comparative Example 1 |
|---|---|---|
| Maximum Diameter a | 10 µm to 30 µm | 100 µm, approximately |
| Maximum Diameter b | 10 µm to 30 µm | 100 µm, approximately |
| Maximum Diameter c | 10 µm to 30 µm | 100 µm, approximately |
| Maximum Diameter d | 10 µm to 30 µm | 100 µm, approximately |
| Percentage of pores with aspect ratio a/b ≤ 1.3 | 70% or more | less than 30% |
| Percentage of pores with aspect ratio c/d ≤ 1.3 | 70% or more | less than 30% |

As shown in Table 1, the diameter a, which is the maximum diameter of Test Example 1, was in a range from 10 µm to 30 µm, inclusive. The diameter b, which is the maximum diameter of Test Example 1, was also in a range from 10 µm to 30 µm, inclusive. As seen from the above, the maximum diameters (the sizes a and b) of the all pores whose shapes were extracted were in a range from 10 µm to 30 µm, inclusive. The diameter c, which is the maximum diameter of Test Example 1, was also in a range from 10 µm to 30 µm, inclusive. The diameter d, which is the maximum diameter of Test Example 1, was also in a range from 10 µm to 30 µm, inclusive. As seen from the above, the maximum diameters (the diameters c and d) of all the pores whose shapes were extracted were in a range from 10 µm to 30 µm, inclusive. Moreover, 70% or more of the aspect ratios a/b of the pores of Test Example 1 were 1.3 or less. 70% or more of the aspect ratios c/d of the pores of Test Example 1 were also 1.3 or less. In view of the above, 70% or more of the pores of Test Example 1 may be determined to be perfectly spherical or substantially perfectly spherical and a majority of the pores of Test Example 1 may be determined to be perfectly spherical or substantially perfectly spherical.

In contrast, the diameter a, which is the maximum diameter of Comparative Example 1, was 100 µm, approximately. The diameter b, which is the maximum diameter of Comparative Example 1, was also 100 µm, approximately. The diameter c, which is the maximum diameter of Comparative Example 1, was also 100 µm, approximately. The diameter d, which is the maximum diameter of Comparative Example 1, was also 100 µm, approximately. Moreover, less than 30% of the aspect ratios a/b of the pores of Comparative Example 1 were 1.3 or less. Less than 30% of the aspect ratios c/d of the pores of Comparative Example 1 were also 1.3 or less. In view of the above, 70% or more of the pores of Comparative Example 1 may be determined to be in a flattened shape and a majority of the pores of Comparative Example 1 may be determined to be in a flattened shape.

Next, Test Example 1 and Comparative Example 1 were subjected to an evaluation test for sealability. Fig. 5 is a schematic diagram of a sealability evaluation tester 100 for evaluating sealability. As illustrated in Fig. 5, the sealability evaluation tester 100 includes a pair of jigs 101, 102 and a heater 103 attached to the jig 102. Moreover, guide paths 104, 105, which guide a fluid, are formed between the jig 101 and the jig 102, respectively. The guide path 104 ends in the jig 101 and the guide path 105 is configured to be able to supply the fluid to the guide path 104 of the jig 101. Moreover, Test Example 1 or Comparative Example 1 is to be sandwiched between the jig 101 and the jig 102 so that Test Example 1 or Comparative Example 1 seals the guide paths 104, 105 between the jig 101 and the jig 102. In other words, with the sealing surface 2A of Test Example 1 being in contact with a surface 101a of the jig 101 and the sealing surface 3A of Test Example 1 being in contact with a surface 102a of the jig 102, Test Example 1 is compressed between the jig 101 and the jig 102. Moreover, the guide paths 104, 105 are opened in the through hole 4A of Test Example 1. Comparative Example 1 is to be attached between the jig 101 and the jig 102 in the same manner as Test Example 1.

For the evaluation test for sealability, a temperature of a gas guided through the guide paths 104, 105 was set to room temperature (25°C) and a high temperature (300°C) using the heater 103 and then a supply pressure for gas at which a leakage of each of the room-temperature gas and the high-temperature gas from the gasket (Test Example 1 and Comparative Example 1) occurred was measured. Table 2 shows results of the evaluation test for sealability.

**[Table 2]**

| | Test Example 1 | Comp. Example 1 |
|---|---|---|
| Pressure at which leakage of room-temp. (25°C) gas occurred | 300 kPa | 100 kPa |
| Pressure at which leakage of high-temp. (300°C) gas occurred | 450 kPa | 50 kPa |

In Test Example 1, a leakage of the room-temperature gas occurred when the supply pressure for gas was 300 kPa as shown in Table 2. Moreover, in Test Example 1, a leakage of the high-temperature gas occurred when the supply pressure for gas was 450 kPa. In contrast, in Comparative Example 1, a leakage of the room-temperature gas occurred when the supply pressure for gas was 100 kPa. Moreover, in Comparative Example 1, a leakage of the high-temperature gas occurred when the supply pressure for gas was 50 kPa.

As seen from the above, the pressure at which a leakage of the room-temperature gas occurs in Test Example 1 is higher than the pressure at which a leakage of the room-temperature gas occurs in Comparative Example 1. The pressure at which a leakage of the high-temperature gas occurs in Test Example 1 is also higher than the pressure at which a leakage of the high-temperature gas occurs in Comparative Example 1. Moreover, in Test Example 1, the pressure at which the leakage of the high-temperature gas occurs is higher than the pressure at which the leakage of the room-temperature gas occurs. Since a size of the pores of Test Example 1 is smaller and Test Example 1 is higher in airtightness, the pores inside Test Example 1 thermally expand with a temporal increase in internal stress of Test Example 1 under a high-temperature environment in which a gas with a high temperature flows through the guide paths 104, 105. This reduces a deformation caused when pressure is applied to Test Example 1, in other words, increases a reaction force of Test Example 1, making the sealing performance of Test Example 1 higher than at room temperature. In contrast to the above, in Comparative Example 1, the pressure at which the leakage of the high-temperature gas occurs is lower than the pressure at which the leakage of the room-temperature gas occurs.

As described above, the elastomer porous body (Test Example 1) of the gasket 1 according to the embodiment of the present invention makes it possible to improve the sealability relative to a gas with a high temperature and seal a 300°C gas. The elastomer porous body (Test Example 1) of the gasket 1 according to the embodiment of the present invention also makes it possible to improve the sealability with an increase in temperature of the gas to be sealed. In contrast, a conventional porous body (Comparative Example 1) decreases in sealability with an increase in temperature of the gas to be sealed.

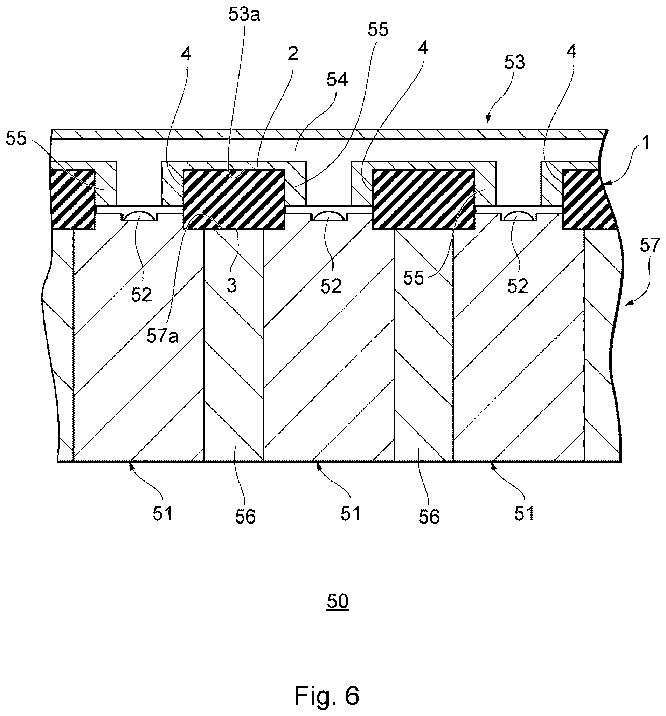

Next, description will be made on workings of the gasket 1 according to the embodiment of the present invention. Fig. 6 is a cross-sectional view illustrating the gasket 1 in the in-use state, in which the gasket 1 is attached to a battery module 50 including a plurality of battery cells 51. As illustrated in Fig. 6, each of the battery cells 51 is provided with a gas release valve 52 and the battery module 50 includes a release pipe 53 in which a gas release path 54 is formed to guide a gas released from the gas release valve 52 of each of the battery cells 51 to the outside. The release pipe 53 is provided with an opening 55 corresponding to the gas release valve 52 of each of the battery cells 51. In the release pipe 53, the gas release path 54 is configured to guide the gas entering through each of the openings 55 to the outside. The release pipe 53 is made of resin. A resin 56 for insulation intervenes between the battery cell 51 and another battery cell 51 and the plurality of battery cells 51 are arranged side by side, forming a battery cell group 57.

As illustrated in Fig. 6, in the in-use state, the gasket 1 is sandwiched between the battery cell group 57 and the release pipe 53, sealing a flow path between each of the gas release valves 52 and the corresponding opening 55 of the release pipe 53. Specifically, the gasket 1 is compressed between the battery cell group 57 and the gas release valve 52 with the sealing surface 2 of the gasket 1 being in contact with a surface 53a of the release pipe 53 and the sealing surface 3 of the gasket 1 being in contact with a surface 57a of the battery cell group 57. Moreover, the gas release valve 52 and the opening 55 are received and opened in each of the through holes 4 of the gasket 1. The gasket 1 is configured to cause the gas released from the gas release valve 52 to enter the release pipe 53 without leakage in this manner.

The gasket 1 is provided by the above-described elastomer porous body and has a pore with a diameter in a range from 10 µm to 30 µm, inclusive, inside. A large number of the pores inside the gasket 1 are such extremely small pores, which makes the airtightness high with respect to a gasket made of foam as in Comparative Example 1. One reason for this is that a pressure loss of the flow path through the inside of the gasket 1 is large. In contrast, since the gasket 1 is the porous body, a reaction force generated when the gasket 1 is compressed is smaller than a reaction force generated by a gasket made of a solid rubber. This makes it possible to reduce a reaction force applied to the release pipe 53 even though a resin member with a low strength, such as the release pipe 53, is a contact surface with the sealing surfaces 2, 3, preventing damage to the release pipe 53. However, even though the reaction force applied to the release pipe 53 is low, the airtightness of the gasket 1 is high as described above, which makes it possible to prevent or reduce a decrease in sealing performance.

Moreover, a Poisson's ratio of the gasket 1 is smaller than a Poisson's ratio of a gasket made of a solid rubber, which makes it possible to reduce interference with another component due to a deformation of the compressed gasket 1 in the in-use state.

Moreover, the sealing performance of the gasket 1 is improved with an increase in temperature of the gas to be sealed as described above. In the battery module 50, the gas release valves 52 opens as the gas in the battery cells 51 becomes high in temperature and, consequently, becomes high in pressure. The sealing of the battery module 50 by the gasket 1 is thus necessitated only when the gas in the battery cells 51 becomes high in temperature. In contrast, when the gas in the battery cells 51 is not high in temperature, the sealing by the gasket 1 is not necessary. Therefore, the gasket 1, which has a low reaction force in the in-use state and exhibits a sealing performance relative to an object to be sealed with a high temperature, is suitable as a gasket for the gas release valves 52 of the battery module 50.

Moreover, the battery cells 51 and the release pipe 53 are secured to each other by, for example, snap-fit coupling between a resin claw and a recessed portion engageable with the claw. Accordingly, as for a gasket to be sandwiched between the battery cells 51 and the release pipe 53, a reaction force generated in the in-use state is required to be low. The reaction force of the gasket 1 in the in-use state is low as described above. In this regard, the gasket 1 is also suitable as a gasket for the gas release valves 52 of the battery module 50.

Moreover, the pores of the elastomer porous body of the gasket 1 include a spherical or perfectly spherical pore. Concentration of stress is unlikely to occur at the perfectly spherical pore when the gasket 1 is compressed. The perfectly spherical pore is thus unlikely to be broken due to deformation. Therefore, even though being the porous body, the gasket 1 is unlikely to be damaged due to deformation.

As described hereinabove, the gasket 1 according to the embodiment of the present invention enables not only reducing a reaction force in the in-use state and reducing a decrease in sealing performance, but also reducing a decrease in sealing performance relative to a gas with high temperature and high pressure.

The present invention is described through the above-described embodiments hereinabove but the technical scope of the present invention is not limited to the scope according to the above-described embodiments. It is obvious to those skilled in the art that a variety of modifications or improvements may be added to the above-described embodiments. It is obvious from the recitation in claims that a mode added with such a modification or an improvement is also within the technical scope of the present invention.

The embodiments described above are intended to facilitate the understanding of the present invention but not intended for a limited interruption of the present invention. Furthermore, the above-described embodiments are not intended to limit the objects to which the present invention is applicable and the present invention may be applied to any object. The components of the above-described embodiments and the locations, materials, conditions, shapes, sizes, and the like thereof are not limited to those described by way of example and may be modified, if necessary. For example, the present invention encompasses a difference generated in implementation, such as a manufacturing tolerance. Moreover, the components described in the different embodiments may be partially replaced or combined within the scope of technical consistency. Moreover, the individual components may be selectively combined, if necessary, to achieve at least some of the problems to be solved and the effects described above.

### [Reference Signs List]

1 gasket, 2, 2A, 3, 3A sealing surface, 4, 4A through hole, 50 battery module, 51 battery cell, 52 gas release valve, 53 release pipe, 53a surface, 54 gas release path, 55 opening, 56 resin, 57 battery cell group, 57a surface, 100 sealability evaluation device, 101, 102 jig, 101a, 102a surface, 103 heater, 104, 105 guide path

## Claims

1. A gasket that seals a 300°C gas, the gasket being made of a porous body of an elastomer.

2. The gasket according to claim 1, wherein
the porous body of the elastomer has a plurality of pores, the plurality of pores including a pore having a diameter in a range from 10 µm to 30 µm, inclusive.

3. The gasket according to claim 1, wherein
the plurality of pores include a pore having an aspect ratio of 1.3 or less, the aspect ratio being a ratio between a diameter a and a diameter b, the diameter a being a maximum diameter of a cross section of the porous body of the elastomer, the diameter b being a diameter in a direction perpendicular to the diameter a.

4. The gasket according to claim 3, wherein
the plurality of pores have another aspect ratio of 1.3 or less, the other aspect ratio being a ratio between a diameter c and a diameter d, the diameter c being a maximum diameter of another cross section perpendicular to the cross section of the porous body of the elastomer, the diameter d being a diameter in a direction perpendicular to the diameter c.

5. The gasket according to claim 4, wherein
a percentage of the pore having the aspect ratio of 1.3 or less in the cross section is 70% or more and a percentage of the pore having the other aspect ratio of 1.3 or less in the other cross section is 70% or more.

6. The gasket according to claim 1, wherein
the porous body of the elastomer is a porous body of a silicone elastomer.

7. The gasket according to claim 1, having:
a pair of surfaces facing away from each other; and
at least one through hole penetrating the pair of surfaces.

8. The gasket according to claim 7 configured to be attached so that a flow path between a gas release valve of each of a plurality of battery cells of a battery module and a gas release path, the gas release path forming a space to guide a gas released from the plurality of gas release valves.
